# EUROPEAN PATENT APPLICATION

(11) **EP 4 467 856 A1**
(43) Date of publication of application: **27.11.2024**
(21) Application number: 23175777.4
(22) Date of filing: 26.05.2023
(51) Int. Cl.: F16K 11/10, F16K 15/18, F16K 27/02

(54) **IMPROVED INTEGRATED CHECK VALVE AND NEEDLE VALVE COMBINATION**

(71) Applicant: Danfoss A/S, 6430 Nordborg (DK)
(72) Inventor: FOCK, Clemens, Nordborg (DK); LARSEN, Sigurd, Nordborg (DK)
(74) Representative: Stevens, Brian

(57) **Abstract**

The invention relates to a combined valve subassembly (2) and a combined valve arrangement (1) comprising a housing (3) and such a combined valve subassembly (2). The combined valve subassembly (2) comprises a variable orifice device (4) for restricting a fluid flow throughput and a valve poppet member (6) for a passive valve unit (5). The valve seat (7) of the passive valve unit (5) is formed integral with the housing (3). The combined valve subassembly (2) has a connecting member (15, 26) that comprises a guiding member (18, 27) with a guiding surface (16) for the valve poppet member (6) and at least one fluid conduit (17) for fluidly connecting the variable orifice device (4) and the valve poppet member (6).

## Description

The invention relates to a combined valve subassembly. Furthermore, the invention relates to a combined valve arrangement, comprising a combined valve subassembly.

When fluids are conveyed in an arrangement, it is a frequently occurring task to control the flow of the fluid in certain ways. This "control of the flow of a fluid" may be interpreted in a very broad way.

As an example, the "control of the flow of a fluid" may be a simple split up of a single fluid flow in a single conduit into two partial fluid flows in two different fluid conduits (or - seen vice versa - the joining of two fluid conduits into a single one). Some kind of a Y- or T-shaped fluid conduit intersection may be used for this.

The "control of the flow of a fluid" may also relate to a situation, where a fluid flow is permitted in only one direction. The typical device for realising this is a check valve, where the check valve may be an actively controlled check valve or a passively controlled check valve (the latter being the usual choice).

Another type of "control of the flow of a fluid" is to control the direction of the fluid flow, for example using controllable switching valves like a controllable 2/3-valve, or the like.

Yet another type of "control of the flow of a fluid" is to reduce or increase a fluid flow throughput. The typical device for realising this task is a throttle valve, where different designs of throttle valves are known in the prior art. Just to name a particular example, a needle valve with a controllable needle may be used for this.

Quite often, however, not only a single one of the above described (and even further) types of a "control of the flow of a fluid" has to be used in a more complex fluid conduit arrangement. Rather, typically a plurality of such - in particular different - fluid flow controlling devices have to be used for a more complex fluid flow arrangement.

The most straightforward way to realise this is to simply use the appropriate number and types of fluid flow controlling devices, as required, and to connect them together using tubes and hoses. While this simple and straightforward approach is undeniably functional and frequently used, even in nowadays fluid conduit arrangements, this approach has certain deficiencies. In particular, the respective devices have to be fluidly connected together. This, however, results in increased cost for manufacturing the arrangement. Furthermore, every fluid connection comes along with a certain risk of fluid leakage to occur. Also, an arrangement "side-by-side" necessitates a certain additional mounting space (for example for the fluid connections between the various devices), which can be a problem, in particular for size-sensitive applications.

To deal with this problem, the idea of integrating several fluid flow control devices into a single integrated unit is known and used in the state-of-the-art for several decades. However, there are also disadvantages connected with this approach. Namely, a larger variety of preassembled fluid flow controlling arrangements have to be produced, stored and distributed, so that one can choose from an appropriate integrated device. In extreme cases, it is even necessary to produce custom-designed integrated combinations. This disadvantage is, however, frequently outweighed by the advantages of this approach. In particular in case of large production numbers, even the custom-designed approach does not pose a major problem.

Nevertheless, the design and manufacture of integrated arrangements of various different fluid flow control devices can be a comparatively complex task. In particular, the resulting integrated arrangement to be produced can be problematic to manufacture.

In the following, an integrated arrangement comprising a fluid throttling device (in particular a needle valve) and a check valve with an integrated fluid branching connection will be discussed. Such an arrangement is a combination that is frequently required in refrigeration / heat pump cycles (but not limited to them).

Due to the frequent use of such a valve combination, designs for an integrated version of such an arrangement has already been proposed in the state of the art.

Although the basic design thereof is simple, the detailed construction is nevertheless problematic. With present-day arrangements, it is usually necessary to use complicated manufacturing steps. In particular, quite often the check valve unit and the needle valve have to be inserted into a common housing from different sides and/or in different assembly steps. This, of course, increases the cost for the manufacture of the valve arrangement. Further, depending on the exact design, a comparatively high risk of fluid leakage may be present.

Also, it is quite often necessary to design the (common) housing of the valve arrangement in a way that two or more housing parts have to be machined as separate parts and bonded together later on. This is usually necessary due to the comparatively complex design of the inner fluid conduits, requiring a complex machining of the interior of the housing, frequently including back tapers. It is easily understandable that manufacturing separate parts and bonding them later on is usually more expansive, as compared to simply machining a single material block. Furthermore, the joints between the respective parts of the housing do always pose a risk for leakage or material fatigue.

Therefore, there is still a need for improving the design and manufacture of a combined valve arrangement, comprising a check valve, a branching-off fluid conduit and a needle valve.

Therefore, the object of the invention is to suggest a combined valve subassembly that is improved over combined valve subassemblies that are known in the state-of-the-art. It is another object of the invention to propose a combined valve arrangement that is improved over combined valve arrangements as they are known in the prior art.

A combined valve subassembly according to claim 1 solves this object.

Further, a combined valve arrangement according to claim 11 solves this object.

It is suggested to design a combined valve subassembly that comprises a variable orifice device for restricting a fluid flow throughput and a valve poppet member for a passive valve unit in a way that a connecting member is provided, wherein the connecting member comprises a guiding member with a guiding surface for the valve poppet member and at least one fluid conduit for fluidly connecting the variable orifice device and the valve poppet member. Using a preassembled subassembly for so-to-say both functions, i.e. for the function of a throttling device (variable orifice device) and a check valve arrangement (valve poppet member for a passive valve unit), it is easier to preassemble the subassembly and to later assemble the combined valve subassembly in a housing or the like. In particular, outside of a housing, there is usually more available space for handling the various components required. Further, a broader variety of mounting tools and mounting aids may be used.

Even further, a broader range of accessing directions for the various mounting tasks may be used. Furthermore, by using a preassembled subassembly, mounting of the subassembly into a housing (and in particular providing a corresponding member for the valve poppet member to complete the passive valve device) may be done with less manufacturing steps, further facilitating the arrangement of a complete combined valve arrangement. As yet another advantage, there are less sealing issues to be considered. Therefore, leakage is less prone to occur and additionally usually less effort to prevent any leakage is needed, so that - as an example - fewer sealing rings or the like may be used. In this context it should be mentioned that in particular leakage of fluid to the outside has to be prevented. Using the presently proposed design, typically only one port that has to be closed and sealed towards the outside when mounting the combined valve subassembly into a housing is needed. So-to-say "inner leakages" are usually less problematic. A bit of bleeding leakage is usually not a problem for internal sealings. Just to name an example: if a minor fluid leakage occurs past the check valve device (either through the check valve device itself, or around it), the functionality of the resulting arrangement is almost never significantly adversely influenced (in particular when it comes to refrigeration cycles).

The variable orifice device may be of essentially any type known in the prior art. In particular, the variability/control of the variable orifice device may be introduced by mechanical, magnetic, electric, fluidic (gas pressure, liquid pressure or the like) or by any other suitable means. The variation of the variable orifice device may advantageously be effectuated during operation of the apparatus, the combined valve subassembly is used for. Therefore, the variable orifice device should usually be variable while fluid is passing through the combined valve subassembly, in particular through the variable orifice device part thereof. When talking about a fluid in the present context, gas and liquid, as well as mixtures thereof may be envisaged (including the presence of a supercritical fluid, where no clear distinction may be made anymore between a liquidous and a gaseous phase). Furthermore, the fluid may contain a small amount of solid particles. Such particles may particularly come from wear of the various parts of the arrangement, the presently suggested combined valve subassembly is used in, when being in operation. In particular, a refrigerant for a refrigeration cycle may be used as a fluid (like R134a, R744 (CO2), R404, propane, butane and the like). In particular in such cases, the physical state the fluid (refrigerant) is in usually varies according to the position within the fluid arrangement (refrigeration cycle) and/or the operational condition, the fluid arrangement (refrigeration cycle) is in. More particularly, the variation of the variable orifice device may be effectuated by an externally applied signal. This, however, does not rule out the possibility that there may be a certain influence by the fluid that is passing through the variable orifice device.

As a passive valve, essentially all designs of passive valve units that are known in the prior art may be used. This includes, without limitation, check valves, single way valves, directional valves, fluid flow throughput limiting valves and the like. Passive in the present context should usually be considered in a way that the (major) regulatory influence for the passive valve unit comes from the fluid that is passing through the passive valve unit itself. This, however, does not exclude the possibility that at least at times and/or for certain operational situations an external control signal may be applied that may override the passive switching behaviour of the passive valve unit. Just to name an example, the passive unit may be a check valve, where - irrespective of the pressures at the two fluid ports of the check valve - a closed position may be commanded as a safety means. Likewise, an open position might be commanded to guarantee a fluid passage through the passive valve unit for certain operational situations.

The valve poppet member may show essentially any form that is suitable for its purpose. In particular, classical valve heads may be used. However, ringlike structures and the like may be used as well. It is to be noted that the valve poppet member may comprise a plurality of valve poppet means/surfaces. This includes the possibility of a plurality of valve poppet members.

A connecting member is provided for both mechanically and fluidly connecting the variable orifice device and the valve poppet member/the passive valve unit (when completed). The connecting member comprises a guiding surface for the valve member. Therefore, the connecting member may serve the purpose of a guiding pin. It is to be noted that the guiding surface/the guiding member of the connecting member may show any suitable shape. In particular, the guiding surface may be a guiding surface of a male member and/or of a female member. A guiding surface of a male member may be a circumferential surface of a protruding pin or the like, while a guiding surface of a female member may be the surface of a hole or the like. The fluid conduit of the connecting member may be realised by one or a plurality of fluid channels. In particular, bores or the like may be envisaged for this task. It is to be noted that the connecting member may show a single piece design, where the guiding member, providing the guiding surface for the valve poppet member, and the member providing the fluid conduit are fixedly attached to each other, or are even manufactured from a single material block. However, it is also possible that separate parts are used, where the respective parts may be reversibly connected to each other. Reversibly may mean that they are simply plugged together. However, it is also possible to provide certain attachment means like a threaded connection or the like.

When talking about an axial direction in the context of the present document, it is to be noted that the combined valve subassembly typically shows an elongated design with a long, profound longitudinal axis and a comparatively small diameter/sideward dimension (in particular in a direction, perpendicular to the longitudinal axis). Typically, a comparatively large fraction of the lengthwise extent of the combined valve subassembly (in particular the part that is to be inserted into a receiving space of a housing or into a similar receiving space) shows an essentially rotational symmetry, or an essentially n-count symmetry. Therefore, the axial direction can correspond (essentially) to the elongated, profound longitudinal axis and/or the axis of symmetry (in particular the rotational or the n-count symmetry axis). Furthermore, the axial direction might also be defined additionally or alternatively as a collinear direction between (a predominant point of/a lengthwise direction of) the variable orifice device and/or (a predominant point of/a lengthwise direction of) the guiding member and/or (a predominant point of/a lengthwise direction of) the valve poppet member. Any two devices of the aforementioned list may be used, including the case where a (common) collinear line is defined by all three devices. Additional devices might be used as well for the definition of the axial direction in the aforementioned sense, like (a predominant point of/a lengthwise direction of) the actuator of the combined valve subassembly (if present), and the like. Additionally or alternatively, the axial direction may be defined by an elongated, profound lengthwise direction of a receiving space (for example in a housing), in particular for receiving the combined valve subassembly. The afore said about a collinear direction may apply mutatis mutandis for a collinear direction between (predominant points of/lengthwise directions of) sections for receiving the variable orifice device, the guiding member and/or the poppet member (and further devices).

While essentially any type of variable orifice device may be used for the combined valve subassembly, it is preferred if the variable orifice device comprises at least a needle valve unit. Such needle valve units are, as such, known in the prior art. In particular, they show a good throttling behaviour that is particularly suitable for refrigeration cycles, but not limited to them. The needle valve unit typically shows a needle and a bore/an orifice, where the needle and the bore/orifice may be (axially) moved relative to each other. Typically the needle valve shows a changing/varying diameter along its (axial) length, for example it may show some kind of a tapered shape. Then, by a relative axial movement of the needle with respect to the orifice, the fluid flow throughput through the needle valve unit can be varied, and possibly even cut off.

It is particularly suggested that the valve poppet member is arranged to be movable, preferably to be slidable. In particular a movability in an axial direction of the valve poppet member and/or of the connecting member and/or of the guiding member of the connecting member and/or of the combined valve subassembly may be envisaged. The movement, in particular a sliding movement, may be considered with respect to the remaining parts of the valve subassembly, and - when properly installed - with respect to the housing, a valve seat and so on. In particular, a (sliding) movement may be realised with respect to the guiding member and/or the guiding surface of the guiding member of the connecting member.

A preferred design of the combined valve subassembly may be realised if the valve poppet member is mechanically biased, in particular using a mechanical spring, more particularly using a helical spring. This way, the passive regulating behaviour of the valve poppet member/passive valve unit can be realised particularly easily. However, different means for biasing may be realised as well, like a magnetic biasing, a biasing using gas pressures or fluid forces, a biasing using rubber elements and so on, just to name a few examples.

When using a helical spring, it is particularly possible to use the guiding member/the guiding surface of the guiding member as a mount for the helical spring. This way, a particularly simple and cost-effective design can be realised for the combined valve subassembly.

Furthermore, it is suggested to design the combined valve subassembly in a way that the valve poppet member is designed and arranged to be used as a valve poppet member of a passive check valve unit and/or as a valve poppet member of a passive single way valve unit. This way, an advantageous arrangement of two fluid influencing devices that are regularly used as a combination in certain types of fluid circuits, in particular in refrigeration circuits, can be realised. Furthermore, since such fluid circuits, in particular refrigeration circuits, show requirements that are well served by the presently proposed combined valve subassembly design, this combined valve subassembly is particularly advantageous.

Furthermore, it is suggested to design the combined valve subassembly in a way that the variable orifice device is actuated by an actuator device, preferably by an electric actuator device, preferably by a stepper motor device. In particular, both a linear, as well as a rotational (electric) motor may be employed. When using a rotating motor design, the rotation can be translated into a linear movement by a threaded connection between a threaded pin and a threaded sleeve, to name a possible design. Other designs are possible as well, like a rotating cog that engages into a toothed rack.

Another preferred embodiment can be realised is the variable orifice device and/or the valve poppet member are designed and arranged in a way to have a regulation movement. This way, comparatively small variations in the direction of the fluid flow are occurring along the combined valve subassembly. This limits any fluid flow resistances and therefore any unwanted pressure losses to an unavoidable minimum. In particular, turbulent flows can be avoided. Furthermore, the presently proposed design of a combined valve subassembly may facilitate the design of the combined valve subassembly itself, and in particular the arrangement thereof inside a housing or the like.

Furthermore, it is suggested to design the combined valve subassembly in a way that a section of the combined valve subassembly comprising the valve orifice device and/or a section of the combined valve subassembly comprising the valve poppet member and/or a section of the combined valve subassembly comprising the connecting member show an essentially circular cross-sectional shape. Using this design, it is particularly simple to arrange the combined valve subassembly in a housing or a similar device. In particular, possibly no alignment in a rotational direction has to be performed. Furthermore, using such a circular cross-sectional shape, a screw-like attachment of the combined valve subassembly in a housing can be performed very simple, and furthermore a comparatively high sealing force can be realised easily. In particular the angle of the threads should be chosen in a way that the connection is self-locking.

Furthermore, it is suggested to design the combined valve subassembly in a way that at least a section of the combined valve subassembly comprising the valve orifice device and/or a section of the combined valve subassembly comprising the valve poppet member and/or a section of the combined valve subassembly comprising the connecting member show an essentially monotonically decreasing diameter along the axial extent of the combined valve subassembly. In particular this might be considered as some kind of a tapered shape. Typically (but not necessarily), the decrease in diameter is realised in steps. The direction in which the diameter decreases is usually the direction towards the front/tip of the combined valve subassembly, i.e. the part that is introduced first into its foreseen receiving space, when it is mounted in a housing, for example. This way, it is particularly easy to place the combined valve subassembly in its foreseen receiving space (for example in a housing), where the receiving space can be produced by simple material removing techniques, for example by performing drilling and/or milling operations. Furthermore, the housing (the receiving space in general) does not have to be designed in a way that it can be opened for inserting the combined valve subassembly. Therefore, it is not necessary to design the housing (or receiving space) in form of two half shells that can be bonded to each other, in particular in a fluid tight way.

Even further, it is suggested to design the combined valve subassembly in a way that is designed and arranged in a way to comprise separately handable sub-units. In particular, the variable orifice device and/or the guiding member and/or the valve poppet device member may be designed to be separately handable. This way, it is particularly possible to use essentially standard components that are easily available on the market. This does not exclude the possibility to apply some minor adaptions of such standard components before the combined valve subassembly is assembled. Furthermore, arranging the various components of the combined valve subassembly may be particularly easy, since only some plugging-together manipulations may be needed, which can be performed without any special tools, as an example. Just to name some examples of attachment techniques which would be needed otherwise: soldering operations, crimping operations, swage locking manipulations, glueing operations or the like. It is acknowledged that this might lead to the effect that the preassembled combined valve subassembly might fall apart, if it is not handled in an appropriate direction, before it is mounted in a housing or its appropriate receiving space. However, the "fall-apart arrangement" may simplify any maintenance or repair operations. Certainly, it is possible that some or even all of the parts, in particular of the previously mentioned parts, are fixedly connected to each other by appropriate connection techniques (for example as mentioned before). Such a design may make it easier to sell and ship the combined valve subassembly as a separate workpiece before being mounted.

Furthermore, a combined valve arrangement is suggested that comprises a housing, a combined valve assembly of the afore described design, and a valve seat that corresponds to the valve poppet member of the combined valve subassembly. The valve seat may be mechanically connected to the housing. The valve poppet member and the corresponding valve seat may form a passive valve unit. This way, a highly functional combined valve arrangement of a design that is required in certain designs of fluid circuits (in particular refrigeration circuits) can be easily and effectively realised. In particular, the aforementioned modifications, advantages, features and effects can be realised as well, at least in analogy.

It is furthermore suggested to design the combined valve arrangement in a way that the housing is designed as a single piece material block, at least in the vicinity of the combined valve arrangement subassembly. This way, the manufacture of the combined valve arrangement, in particular of the housing, can be achieved particularly easily and in a cost-effective way. It is to be restressed that thanks to the particular design of the combined valve arrangement, the machining of the housing can be realised by simple material removing techniques, in particular by using drilling operations, milling operations and the like. By avoiding any bonding lines/surfaces that come from bonding separate parts of a housing together, the risk of leaks can be advantageously reduced. Furthermore, the possibility of cracks occurring (for example, due to material fatigue along the bonding lines) can be advantageously reduced as well. It is to be noted that certain fluid circuits (like refrigeration circuits) may be very challenging in this respect. This is due to high pressures occurring (as an example, for R744 refrigerants, the pressures do usually lie in the region of 80 to 120 bars), and furthermore due to the fact that the temperatures are changing comparatively heavily when switching the refrigeration circuit on and off.

Furthermore, it is suggested to design the combined valve arrangement in a way that the housing comprises at least three fluid connection ports, in particular a first fluid port, fluidly connecting to a first port of the passive valve unit, a second fluid port, fluidly connecting to a second port of the passive valve unit and a first port of the variable orifice device, and a third port, fluidly connecting to a second port of the variable orifice device. It is to be noted that such a fluid circuitry is needed (or at least desired) for certain fluid circuits, in particular for certain refrigeration circuits. In other words, a fluid flow from the second fluid port to the third fluid port may be suitable, irrespective of the direction of the fluid flow and/or the pressures occurring at the respective ports. A fluid flow from the first fluid port to the third fluid port (and also to the second fluid port) is possible in only one direction, namely originating from the first fluid port of the housing (and being directed to the second and/or third fluid port). A fluid flow from the second and/or third fluid port towards the first fluid port is effectively hindered, however.

Furthermore, it is suggested to design the combined valve arrangement in a way that the passive valve unit is designed and arranged as a check valve that preferably opens when the pressure at the first port of the housing is higher than the pressure at the second port of the housing. Similarly, the check valve closes when the pressure at the second port of the housing is higher than the pressure at the first port of the housing. The same applies mutatis mutandis, when considering the third fluid port and the first fluid port (at least if the variable orifice device is controlled in a way that a certain orifice is present for fluid to pass through the variable orifice device. This is the required behaviour for at least certain fluid flow circuits, in particular for certain refrigeration circuits.

According to a further embodiment, it is possible to design the combined valve arrangement in a way that the housing shows a receiving space for accommodating the combined valve subassembly, wherein at least a section of the receiving space of the housing and/or a section of the receiving space for receiving the valve orifice device of the combined valve subassembly and/or a section of the receiving space for receiving the valve poppet member of the combined valve subassembly and/or a section of the receiving space for receiving the connecting member of the combined valve subassembly show an essentially monotonically decreasing diameter along the axial extent of the receiving space, wherein preferably the geometry of the receiving space and the geometry of the combined valve subassembly are, at least in part, corresponding to each other. In particular, the respective diameter and the respective section along the axial extent of the receiving space of the housing and the respective section along the axial extent of the combined valve subassembly should be adapted to each other/corresponding to each other. In particular, in the corresponding section, the diameters should be essentially the same (where of course a certain play might be envisaged). Similarly, there might be a slight, play-like offset in the axial direction of the change-over between neighbouring sections of corresponding sections of the combined valve subassembly and the receiving space (where, for example, a step-like decrease in diameter occurs). As an example, the changeover position of the combined valve subassembly between the section comprising the variable orifice device and the section comprising the guiding member, and the changeover position of the receiving space in the housing between the section for accommodating the section of the combined valve subassembly comprising the orifice device and the section for accommodating the section of the combined valve subassembly comprising the guiding member, might show a certain, small offset in the axial direction. This way, it is easy to seal off the various fluid containing parts of the final combined valve assembly, for example by using seal rings or the like. Furthermore, using the setup it is particularly easy to manufacture the housing, in particular since the receiving space in the housing can essentially be manufactured by a series of consecutive drilling operations with decreasing diameter of the drill and increasing drilling depth (generally larger diameters for smaller drilling depths and/or smaller diameters for larger drilling depths). This, of course, does not necessarily exclude the possibility of some additional production steps, including additional material removing steps. For completeness, it should be noted that the diameter/radial extent/extent in a direction perpendicular to the axial direction usually decreases with increasing depth inside of the housing. However, does not exclude the possibility that the diameter will increase again. This may be accomplished by appropriate machining, in particular by applying material removing techniques from the opposite direction (for example for providing a fluid access port or the like).

Further advantages, features, and objects of the invention will be apparent from the following detailed description of the invention in conjunction with the associated drawings, wherein the drawings show:
- Fig. 1:: a possible design of a combined valve arrangement comprising a combined valve subassembly in a schematic cross-sectional view;
- Fig. 2:: a first possible design of a guiding member in various views;
- Fig. 3:: a second possible embodiment of a guiding member in a schematic perspective view.

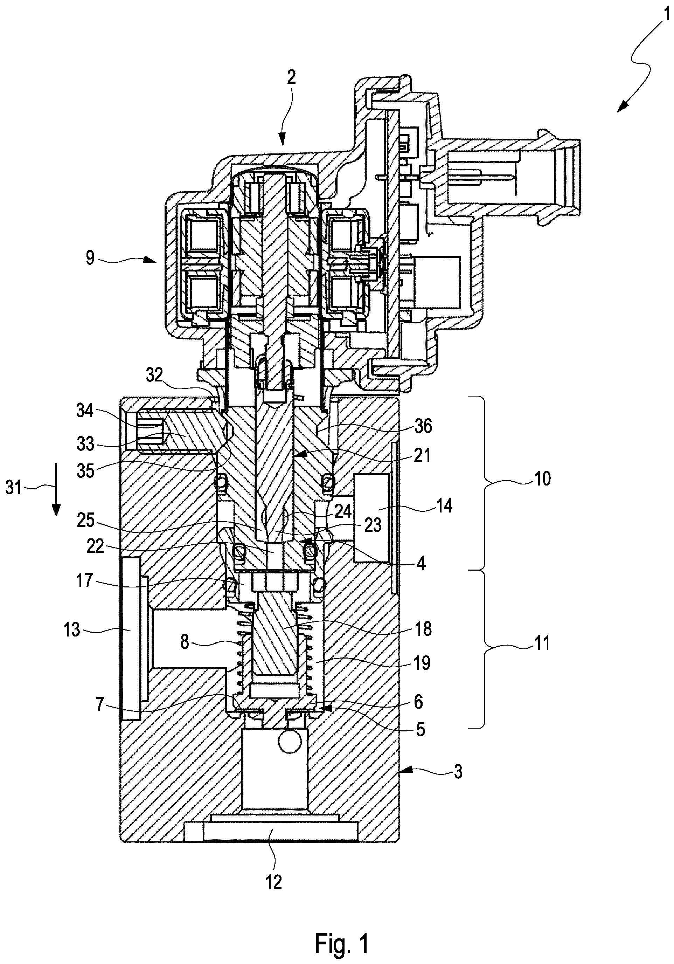

Fig. 1 shows a possible embodiment of a combined valve arrangement 1. The combined valve arrangement 1 comprises a housing 3 with a receiving space 19 for receiving the combined valve subassembly 2. More details about the combined valve subassembly 2 will be described further below.

The housing 3 shows - apart from the insertion opening 32 of the receiving space 19 for the combined valve subassembly 2 - altogether three fluid ports, namely first fluid port 12, second fluid port 13 and third fluid port 14. The three fluid ports 12, 13, 14 can fluidly communicate with each other through the receiving space 19. However, the fluid communication is not free/uninfluenced, but is instead controlled by the combined valve subassembly 2 (in combination with the valve seat 7 of the housing 3), namely by the needle valve unit 4 (in section 10 of the combined valve subassembly 2) and the check valve unit 5 (in section 11 of the combined valve subassembly 2) of the combined valve subassembly 2, as elucidated below.

Furthermore, on the axial tip, opposite of the stepper motor 9, a valve poppet 6 is arranged. Together with the valve seat 7 that is integrally formed with the housing 3 (in the presently shown embodiment), the valve poppet 6 forms a passive check valve unit 5.

The valve poppet 6 is movably arranged in the axial direction 31 of the combined valve subassembly 2. A helical spring 8 (presently manufactured from an elastically deformable metal) pushes the valve poppet 6 in a direction pointing away from the stepper motor 9 and onto the valve seat 7 (in an assembled state of the combined valve arrangement 1).

As can be seen, the valve poppet 6 shows a pot-like hollow interior that fits onto a guiding member 18 of a connection member 15, so that it can be slidably moved along the guiding surface 16 of the guiding member 18.

It is obvious for person skilled in the art that the check valve unit 5 will open, if there is a pressure differential between first fluid port 12 and second fluid port 13/third fluid port 14, where the pressure has to be higher in first fluid port 12 as compared to second fluid port 13/third fluid port 14. It is to be noted that the pressure differential across the check valve unit 5 has to be sufficiently high so that the bias by the helical spring 8 is overcome.

If the pressure differential is too low, or, put differently, the pressure at second fluid port 13/third fluid port 14 is higher as compared to first fluid port 12, the valve poppet 6 rests on the valve seat 7, closing the fluid orifice and hindering any fluid flow through the check valve unit 5.

The combined valve subassembly 2 shows a needle valve unit 4 in section 10 of the combined valve subassembly 2. The needle valve unit 4 comprises a needle 21 that is also movable in an axial direction 31, and that can be moved relative to a bore 22. By appropriately placing the needle 21, the needle valve unit 4 can show a variable orifice for the passage of a refrigerant between second fluid port 13 (possibly first fluid port 12) and third fluid port 14.

Presently, the needle 21 may also be moved in a way to contact the outer rim of the bore 22 of the needle valve unit 4, so that the needle valve unit 4 can be closed, hindering fluid to flow through valve unit 4.

The needle 21 can be moved by an electrically actuated stepper motor 9 that acts as the actuator for the needle 21 of needle valve unit 4. The stepper motor 9 is of a standard design that is in known in the prior art, so that no detailed description is presently made for per brevity. Only for completeness, it should be mentioned that a different actuator may also be used for needle valve unit 4.

The fluid connection between the annular volume 25 around the tapered part 23 of needle 21 and the third fluid port 14 is effectuated by a plurality of radially arranged through bores 24 (one of which it is partly visible behind the tapered part 23 of needle 21 in Fig. 1).

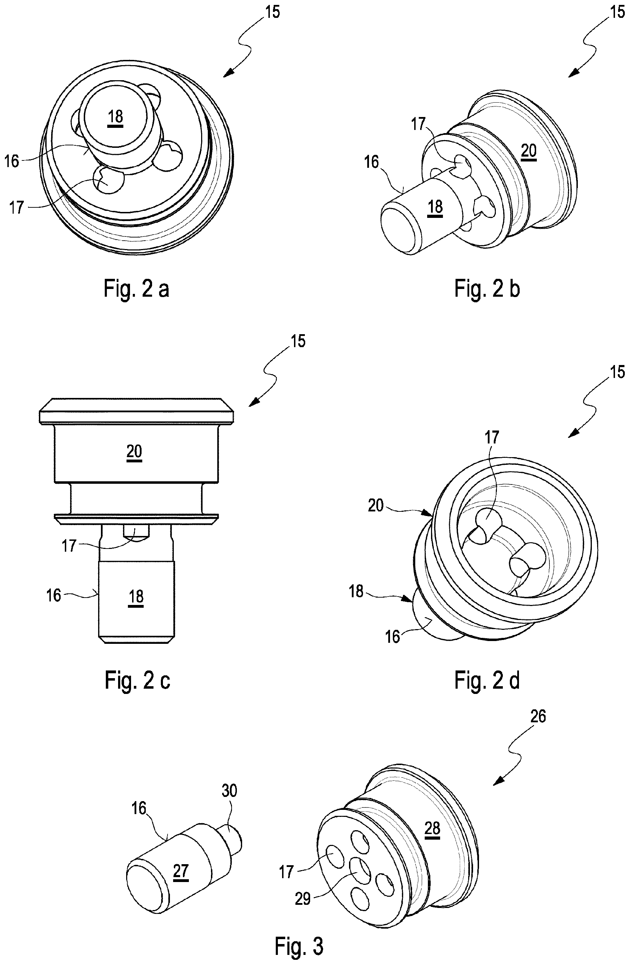

The fluid connection between the second fluid port 13 (possibly first fluid port 12) and the bore 22 of the needle valve unit 4 is established through a plurality of fluid conduits 17 that are provided in the connecting member 15, and are arranged around the guiding member 18 in the presently used embodiment of a connection member 15 (see also Fig. 2). In the presently shown embodiment of a connecting member 15 (Fig. 2), the fluid conduits 17 encompass a certain recess in the guiding member 18 part of the connecting member 15 as well.

It is to be noted that the base part 20 and the guiding member 18 of connecting member 15 according to Fig. 2 are fixedly attached to each other. More details of the design of the connecting member 15 can be seen in the various views of Fig. 2. In particular, it is possible to produce the connecting member 15 by material removing processes, in particular material removing processes involving milling, drilling processes and/or turning processes, as an example.

Returning to Fig. 1, it is worthy to be noted that in the present embodiment of a combined valve arrangement 1, in particular of the combined valve subassembly 2, the needle valve unit 4, the connecting member 15 and the valve poppet 6 (including the helical spring 8) are loosely plugged together. This is advantageous in that the design of the combined valve subassembly 2 facilitates a later maintenance and/or repair operation of the combined valve subassembly 2.

Admittedly, if the combined valve subassembly 2 is not properly handled before being introduced into the housing 3 of the combined valve arrangement 1, the various pieces will fall apart. However, this can be easily circumvented by holding the combined valve subassembly 2 in an essentially upright direction (where the stepper motor 9 is placed at the bottom and the valve poppet 6 at the top. Then, the housing 3 may be simply attached by imposing the housing 3 onto the combined valve subassembly 2 from above. The combined valve subassembly 2 is finally placed inside of the receiving space 19 that is located inside of the housing 3.

A particular advantageous feature of the combined valve arrangement 1, as depicted in Fig. 1, is that the receiving space 19 within the housing 3 is reducing monotonically in diameter from the insertion opening 32 of the housing 3 in the axial direction 31 towards the valve seat 7/first fluid port 12. This monotonic reduction (typically in steps) allows a particularly simple machining of the housing 3. In particular, it is possible to produce the receiving space 19 of the housing 3 (and actually of the complete housing 3) by simple material removing techniques, in particular by drilling operations and/or milling operations in a single/monolithic housing preform. Therefore, it is not necessary to produce two (or more) partial housing pieces that have to be bonded together in a leakage-proof way. This significantly reduces the complexity of the machining operation of the housing 3. Furthermore, any material weaknesses that are essentially unavoidably introduced by bonding such pieces together can be advantageously avoided.

Consistent with the design of the receiving space 19 that shows a monotonic reduction of the size of the diameter, the combined valve subassembly 2 is also designed in a way that its diameter decreases monotonically, starting from the stepper motor 9 towards the valve poppet 6 (this is valid at least for the section 10 of the needle valve unit 4, and the section 11 of the check valve unit 5).

Fixation of the combined valve subassembly 2 inside the housing 3 is possible in a variety of ways. As an example, a threaded connection with corresponding threads that are provided on the inside of of the receiving space 19 of the housing 3 in the vicinity of the insertion opening 32, and on the corresponding part on the outside of the combined valve subassembly 2, is possible.

Presently, however, the attachment is made by a headless screw 33 that is threaded into an appropriate fixation bore 34 of the housing 3. The headless screw 33 shows a tapered front edge 35 that fits into an appropriately designed annular groove 36 that is provided at a part of the combined valve subassembly 2 in the vicinity of the stepper motor 9.

Only for completeness, the following points are pointed out:
The annular groove 36 does establish an exception to the generally monotonically decreasing diameter of the combined valve subassembly 2. However, this does not challenge the afore described advantageous characteristics of the combined valve subassembly 2/the receiving space 19 in the housing 3.

The various parts of the combined valve arrangement 1 that have to be sealed with respect to each other and/or towards the outside are provided with sealing rings that are placed in appropriately arranged annular recesses, as it is obvious for a person skilled in the art. This particular includes the possibility of a fluid-tight sliding contact, thus allowing a sliding movement in connection with a sealing ability of the respective sealing.

Of course, it is necessary to use material removing techniques from different directions/on different sides of the housing 3, so as to be able to machine the various fluid ports 12, 13, 14 as well as the receiving space 19 and the fixation bore 34 for headless screw 33.

In Fig. 3, an alternative design of a connecting member 26 is shown in a schematic perspective view. The presently shown second embodiment of a connecting member 26 differs from the first embodiment of a connecting member 15 that is shown in Fig. 1 in that the guiding member 27 and the base part 28 of the connecting member 26 are produced as separate parts. The two parts 27 and 28 can be plugged together using an appropriately dimensioned protruding pin 30 (that is designed as a protrusion of the guiding member 27) and a recess hole 29 (that is provided in the base part 28 of the connecting member 26). The two pieces 27, 28 can be simply plugged together, followed by a deformation process of the end of the protruding pin 30 within the recess hole 29 for fixation of the two pieces 27, 28 together (riveting-type connection).

It is to be noted that a single one or a plurality of the features of the presently disclosed detailed embodiment may be used in combination with the generic description of the present disclosure.

## Claims

1. Combined valve subassembly (2) comprising a variable orifice device (4) for restricting a fluid flow throughput and a valve poppet member (6) for a passive valve unit (5), **characterised by** a connecting member (15, 26) that comprises a guiding member (18, 27) with a guiding surface (16) for the valve poppet member (6) and at least one fluid conduit (17) for fluidly connecting the variable orifice device (4) and the valve poppet member (6).

2. Combined valve subassembly (2) according to claim 1, **characterised in that** said variable orifice device (4) comprises a needle valve unit (4).

3. Combined valve subassembly (2) according to any of the preceding claims, **characterised in that** the valve poppet member (6) is arranged to be moveable, preferably to be slidable.

4. Combined valve subassembly (2) according to any of the preceding claims, **characterised in that** the valve poppet member (6) is mechanically biased, in particular using a mechanical spring (8), more particularly using a helical spring (8).

5. Combined valve subassembly (2) according to any of the preceding claims, in particular according to claim 4, **characterised in that** the valve poppet member (6) is designed and arranged to be used as a valve poppet member (6) of a passive check valve unit (5) and/or of a passive single way valve unit.

6. Combined valve subassembly (2) according to any of the preceding claims, **characterised in that** the variable orifice device (4) is actuated by an actuator device (9), preferably by an electrical actuator device (9), preferably by a stepper motor device (9).

7. Combined valve subassembly (2) according to any of the preceding claims, **characterised in that** the variable orifice device (4) and/or the valve poppet member (6) are designed and arranged in a way to have a regulation movement in an axial direction.

8. Combined valve subassembly (2) according to any of the preceding claims, **characterised in that** a section (10) of the combined valve subassembly (2) comprising the valve orifice device (4) and/or a section (11) of the combined valve subassembly (2) comprising the valve poppet member (6) and/or a section (10) of the combined valve subassembly (2) comprising the connecting member (15) show an essentially circular cross-sectional shape.

9. Combined valve subassembly (2) according to any of the preceding claims, **characterised in that** at least a section (10) of the combined valve subassembly (2) comprising the valve orifice device (4) and/or a section (11) of the combined valve subassembly (2) comprising the valve poppet member (6) and/or a section (10) of the combined valve subassembly (2) comprising the connecting member (15) show an essentially monotonically decreasing diameter along the axial extent of the combined valve subassembly (2).

10. Combined valve subassembly (2) according to any of the preceding claims, **characterised in that** the combined valve assembly (2) is designed and arranged in a way to comprise separatly handable sub-units, in particular **in that** the variable orifice device (4), the guiding member (15, 26) and/or the valve poppet device member (6) are separately handable.

11. Combined valve arrangement (1), comprising a housing (3), a combined valve subassembly (2) according to any of the preceding claims, and a valve seat (7) that corresponds to the valve poppet member (6) of the combined valve subassembly (2), wherein the valve seat (7) is mechanically connected to the housing (3), and wherein the valve poppet member (6) and the corresponding valve seat (7) form a passive valve unit (5).

12. Combined valve arrangement (1) according to claim 11, wherein the housing (3) is designed as a single piece material block (3), at least in the vicinity of the combined valve arrangement subassembly (2).

13. Combined valve arrangement (1) according to claim 11 or 12, **characterised in that** the housing (3) comprises at least three fluid connection ports (12, 13, 14), in particular a first fluid port (12), fluidly connecting to a first port of the passive valve unit (5), a second fluid port (13), fluidly connecting to a second port of the passive valve unit (5) and a first port of the variable orifice device (4), and a third port (14), fluidly connecting to a second port of the variable orifice device (4).

14. Combined valve arrangement (1) according to any of claims 11 to 13, in particular according to claim 13, **characterised in that** the passive valve unit (5) is designed and arranged as a check valve (5) that preferably opens when the pressure at the first port (12) of the housing (3) is higher than the pressure at the second port (13) of the housing (3).

15. Combined valve arrangement (1) according to any of claims 11 to 14, **characterised in that** the housing (3) shows a receiving space (19) for accommodating the combined valve subassembly (2), wherein at least a section of receiving space (19) of the housing and/or a section (10) of the receiving space (19) for receiving the valve orifice device (4) of the combined valve subassembly (2) and/or a section (11) of the receiving space (19) for receiving the valve poppet member (6) of the combined valve subassembly (2) and/or a section (10) of the receiving space (19) for receiving the connecting member (15) of the combined valve subassembly (2) show an essentially monotonically decreasing diameter along the axial extent of the receiving space (19), wherein preferably the geometry of the receiving space (19) and the geometry of the combined valve subassembly (2) are, at least in part, corresponding to each other.
